# EUROPÄISCHE PATENTSCHRIFT

(11) **EP 2 764 943 B1**
(45) Veröffentlichungstag und Bekanntmachung des Hinweises auf die Patenterteilung: **25.09.2019**
(21) Anmeldenummer: 13194363.1
(22) Anmeldetag: 26.11.2013
(51) Int. Cl.: B23D 57/00

(54) **Seilsäge**
Rope saw
Scie à câble

(30) Priorität: 07.02.2013 DE 102013202041
(43) Veröffentlichungstag der Anmeldung: 13.08.2014
(73) Patentinhaber: Mafell AG, 78727 Oberndorf a.N. (DE)
(72) Erfinder: Schellhammer, Karl, 72172 Sulz-Fischingen (DE)
(74) Vertreter: Manitz Finsterwald Patent- und Rechtsanwaltspartnerschaft mbB

(56) Entgegenhaltungen:
- DE-A1-102010 021 954
- US-A- 2 696 228
- US-A1- 2006 278 057

## Beschreibung

Die vorliegende Erfindung betrifft eine als tragbares Handgerät ausgebildete Seilsäge mit einer Antriebsrolle, einer zu dieser beabstandeten Umlenkrolle und einem Sägeseil, das als geschlossene Schleife über die Antriebsrolle und die Umlenkrolle geführt ist, wobei die Antriebsrolle an einem Maschinenteil der Seilsäge drehbar gelagert ist und die Umlenkrolle derart an einer mit dem Maschinenteil verbundenen Tragkonstruktion drehbar gelagert ist, dass das Sägeseil in einem durch die Tragkonstruktion definierten Ausladungsbereich von einem Freiraum umgeben ist.

Derartige Seilsägen, wie sie beispielsweise in der DE 10 2010 021 954 A1 offenbart sind, eignen sich insbesondere zum Durchführen von Freiformschnitten in Werkstücken aus Isolierstoff, Weichfaserstoff oder Styropor. Dabei ist es häufig gewünscht, ein Werkstück mit bezüglich der Werkstückoberfläche schräger Schnittfläche zu durchtrennen. Die Handhabung der Seilsäge ist bei derartigen Schnitten erschwert.

Die US 2 696 228 A offenbart eine Seilsäge mit einer Antriebsrolle und einer Umlenkrolle, wobei die Umlenkrolle an verstellbaren Stützarmen gelagert ist. Durch ein Verstellen der Stützarme kann das Sägeseil nachgespannt werden.

In der US 2006/0278057 A1 ist eine festinstallierte Seilsäge mit einer Antriebsrolle und zwei Umlenkrollen offenbart. Die Antriebsrolle ist an einem Basisgehäuse gelagert, wohingegen die Umlenkrollen an den Enden eines gekrümmten Arms gelagert sind, welcher mittels einer Rollenanordnung verschwenkbar an dem Basisgehäuse gelagert ist.

Es ist eine Aufgabe der Erfindung, die Handhabung von Seilsägen zu vereinfachen.

Die Lösung der Aufgabe erfolgt durch eine Seilsäge mit den Merkmalen des Anspruchs 1 und insbesondere dadurch, dass die Tragkonstruktion zur Durchführung von seitlichen Schrägschnitten relativ zu dem Maschinenteil um eine zu der Rotationsachse der Antriebsrolle parallele Schwenkachse verschwenkbar ist.

Mit anderen Worten ist die an der Tragkonstruktion gelagerte Umlenkrolle um die Antriebsrolle verschwenkbar. Aufgrund einer solchen Verschwenkbarkeit ist es möglich, das Sägeseil in Bezug auf das Maschinenteil schräg zu stellen. Dadurch ist es beispielsweise ermöglicht, zunächst quer zu der Rotationsachse der Antriebsrolle in ein Werkstück "hineinzusägen" und die Seilsäge anschließend mit verschwenkter Tragkonstruktion parallel zu der Rotationsachse der Antriebsrolle zu führen, sodass ein seitlicher Schrägschnitt entsteht.

Weiterbildungen der Erfindung sind in den abhängigen Ansprüchen, der Beschreibung sowie den beigefügten Zeichnungen angegeben.

Die Erfindung wird im Folgenden beispielhaft unter Bezugnahme auf die Zeichnungen beschrieben.
- Fig. 1: zeigt eine vereinfachte Seitenansicht einer erfindungsgemäßen Seilsäge in einer ersten Betriebsstellung.
- Fig. 2: zeigt die Seilsäge gemäß Fig. 1 in einer zweiten Betriebsstellung.

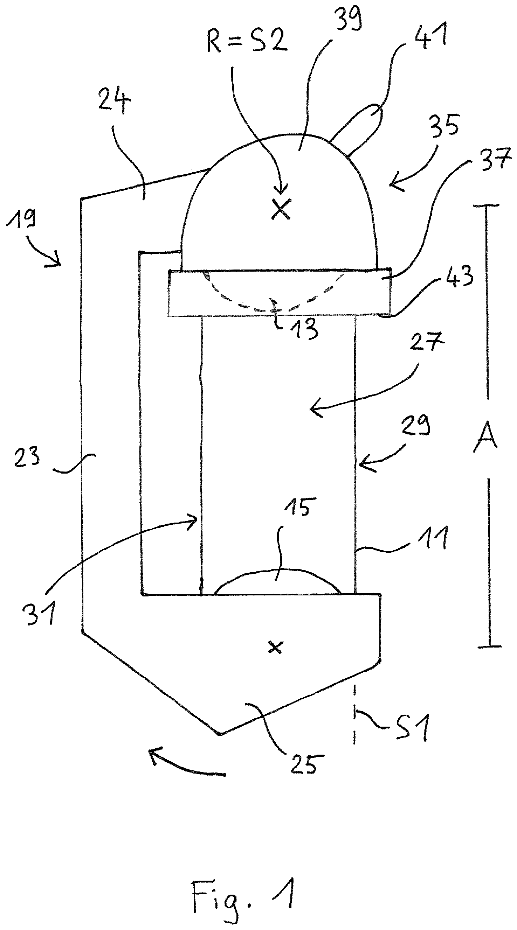

Gemäß Fig. 1 umfasst eine als tragbares Handgerät ausgebildete Seilsäge ein Sägeseil 11, welches als geschlossene Schleife ausgebildet ist und während des Sägebetriebs um eine Antriebsrolle 13 und um eine Umlenkrolle 15 umläuft. Das Sägeseil 11 ist vorzugsweise zu einem isotropen Schneiden ausgebildet und kann zu diesem Zweck mit nicht dargestellten Schneidelementen besetzt sein.

Die Antriebsrolle 13 und die Umlenkrolle 15 werden durch eine Tragkonstruktion 19 der Seilsäge in einem vorgegebenen Abstand A gehalten.

Die Tragkonstruktion 19 umfasst einen oberen Ausleger 24, einen sich vertikal nach unten erstreckenden Spaltkeil 23 sowie einen unteren Ausleger 25, welcher von dem Spaltkeil 23 absteht. Der Spaltkeil 23 ist als plattenartiges Bauteil ausgebildet, dessen Dicke im Wesentlichen der durch das Sägeseil 11 vorgegebenen Schnittbreite entspricht.

Wie aus Fig. 1 hervorgeht, verläuft die Anordnung aus oberem Ausleger 24, Spaltkeil 23 und unterem Ausleger 25 bogen- oder bügelartig um die freien Trumabschnitte 29, 31 des Sägeseils 11 herum und definiert daher einen Ausladungsbereich 27, in welchem ein Arbeitsabschnitt des Sägeseils 11 von einem Freiraum umgeben ist.

Die Tragkonstruktion 19 und die Antriebsrolle 13 sind an einem Maschinenteil 35 gelagert, welches eine Grundplatte 37, einen die Antriebsrolle 13 antreibenden, nicht dargestellten Elektromotor eine Schutzhaube 39 sowie einen Handgriff 41 umfasst, der zum Verriegeln der Tragkonstruktion 19 in einer jeweiligen Schwenkstellung dient, worauf nachstehend näher eingegangen wird. Die direkt an dem Maschinenteil 35 vorgesehene Grundplatte 37 könnte alternativ auch als separates, mit dem Maschinenteil 35 beweglich gekoppeltes Bauteil ausgeführt sein.

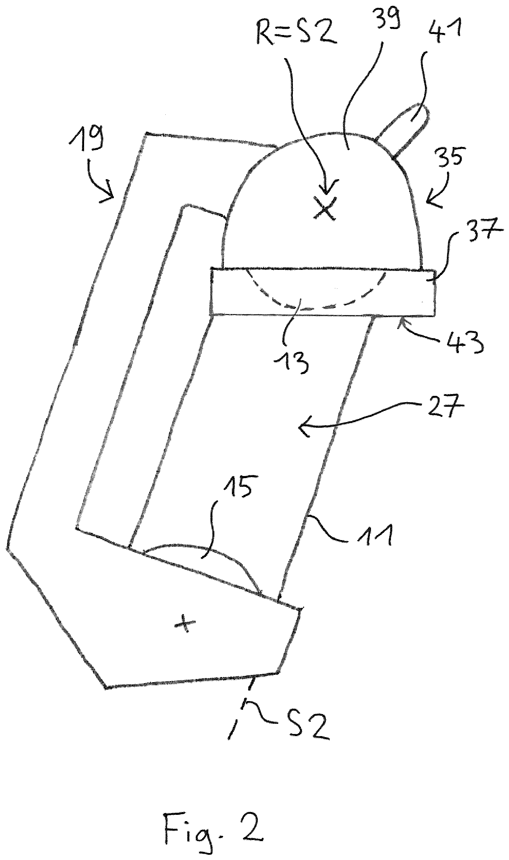

Die Grundplatte 37 weist eine ebene Anlagefläche 43 zum Anlegen der Seilsäge an eine Werkstückoberfläche oder an eine Führungsschiene auf. In dem in Fig. 1 dargestellten ersten Betriebszustand der Seilsäge, welcher einem Grundzustand entspricht, verläuft die Anlagefläche 43 rechtwinklig zu der Seilachse S1 im Bereich des vorderen freien Trumabschnitts 29. Zur Durchführung von seitlichen Schrägschnitten ist die Tragkonstruktion 19 ausgehend von der in Fig. 1 dargestellten ersten Betriebsstellung um eine Schwenkachse S2 relativ zu dem Maschinenteil 35 in die in Fig. 2 dargestellte zweite Betriebsstellung verschwenkbar. Die jeweilige Schwenkstellung wird mittels des Handgriffes 41 fixiert.

Im dargestellten Ausführungsbeispiel fällt die Schwenkachse S2 mit der Rotationsachse R der Antriebsrolle 13 zusammen. Die Seilsäge kann in der zweiten Betriebsstellung bequem unter Auflage der Grundplatte 37 auf die Werkstückoberfläche zunächst in das Werkstück hineingeführt und anschließend in seitlicher Richtung, d.h. parallel zu der Rotationsachse R der Antriebsrolle 13, wieder aus dem Werkstück herausgeführt werden. Bei diesem seitlichen Herausführen entsteht eine schräge Schnittfläche, wie sie z.B. beim Verarbeiten von Isolierstoffen häufig gewünscht ist. Prinzipiell kann die Seilsäge auch mit verschwenkter Tragkonstruktion 19 zuerst in seitlicher Richtung in das Werkstück hineingeführt und anschließend quer zu der Rotationsachse R der Antriebsrolle 13 wieder aus dem Werkstück herausgeführt werden.

Der Schwenkwinkel, um welchen die Tragkonstruktion 19 in der zweiten Betriebsstellung gemäß Fig. 2 gegenüber der ersten Betriebsstellung gemäß Fig. 1 verschwenkt ist, ist rein beispielhaft und kann auch andere Werte annehmen. Vorzugsweise ist der Schwenkwinkel über einen Bereich von wenigstens 0° bis 60° verstellbar, beispielsweise stufenlos. Wie bereits erwähnt, erfolgt die Arretierung in der jeweiligen Schwenkstellung mittels des Handgriffs 41. Es kann jedoch vorgesehen sein, dass die Tragkonstruktion 19 in bestimmten Schwenkwinkeln mit dem Maschinenteil 35 verrastbar ist, beispielsweise bei einem Schwenkwinkel von 45°.

### Bezugszeichenliste

- 11: Sägeseil
- 13: Antriebsrolle
- 15: Umlenkrolle
- 19: Tragkonstruktion
- 23: Spaltkeil
- 24: oberer Ausleger
- 25: unterer Ausleger
- 27: Ausladungsbereich
- 29: vorderer Trumabschnitt
- 31: hinterer Trumabschnitt
- 35: Maschinenteil
- 37: Grundplatte
- 39: Schutzhaube
- 41: Handgriff
- 43: ebene Anlagefläche

- A: Abstand
- S1: Seilachse
- S2: Schwenkachse
- R: Rotationsachse der Antriebsrolle

## Patentansprüche

1. Seilsäge mit
einer Antriebsrolle (13), einer zu dieser beabstandeten Umlenkrolle (15) und einem Sägeseil (11), das als geschlossene Schleife über die Antriebsrolle (13) und die Umlenkrolle (15) geführt ist, wobei die Antriebsrolle (13) an einem Maschinenteil (35) der Seilsäge drehbar gelagert ist und die Umlenkrolle (15) derart an einer mit dem Maschinenteil (35) verbundenen Tragkonstruktion (19) drehbar gelagert ist, dass das Sägeseil (11) in einem durch die Tragkonstruktion (19) definierten Ausladungsbereich (27) von einem Freiraum umgeben ist, und wobei die Seilsäge als tragbares Handgerät ausgebildet ist, **dadurch gekennzeichnet, dass**
die Tragkonstruktion (19) zur Durchführung von seitlichen Schrägschnitten relativ zu dem Maschinenteil (35) um eine zu der Rotationsachse (R) der Antriebsrolle (13) parallele Schwenkachse (S2) verschwenkbar ist.

2. Seilsäge nach Anspruch 1,
**dadurch gekennzeichnet, dass**
die Schwenkachse (S2) mit der Rotationsachse (R) der Antriebsrolle (13) zusammenfällt.

3. Seilsäge nach einem der vorstehenden Ansprüche,
**dadurch gekennzeichnet, dass**
das Sägeseil (11) zu einem isotropen Schneiden ausgebildet ist.

4. Seilsäge nach einem der vorstehenden Ansprüche,
**dadurch gekennzeichnet, dass**
das Maschinenteil (35) oder ein mit dem Maschinenteil (35) verbundener Grundkörper (37) der Seilsäge eine, insbesondere ebene, Anlagefläche (43) zum Anlegen der Seilsäge an eine Werkstückoberfläche oder an eine Führungsschiene aufweist.

5. Seilsäge nach einem der vorstehenden Ansprüche,
**dadurch gekennzeichnet, dass**
die Tragkonstruktion (19) einen Spaltkeil (23) und zwei an dem Spaltkeil (23) angebrachte Ausleger (24, 25) umfasst, wobei die Dicke des Spaltkeils (23) im Wesentlichen der durch das Sägeseil (11) vorgegebenen Schnittbreite entspricht.

## Claims

1. A wire saw comprising
a drive roller (13); a deflection roller (15) spaced apart therefrom; and a saw wire (11) which is guided as a closed loop over the drive roller (13) and the deflection roller (15), wherein the drive roller (13) is rotatably supported at a machine part (35) of the wire saw and the deflection roller (15) is rotatably supported at a support structure (19) connected to the machine part (35) such that the saw wire (11) is surrounded by a free space in a projection region (27) defined by the support structure (19); and wherein the wire saw is configured as a portable handheld device,
**characterized in that**
the support structure (19) is pivotable relative to the machine part (35) about a pivot axis (S2) in parallel with an axis of rotation (R) of the drive roller (13) to carry out lateral oblique cuts.

2. A wire saw in accordance with claim 1,
**characterized in that**
the pivot axis (S2) coincides with the axis of rotation (R) of the drive roller (13).

3. A wire saw in accordance with one of the preceding claims,
**characterized in that**
the saw wire (11) is configured for isotropic cutting.

4. A wire saw in accordance with any one of the preceding claims,
**characterized in that**
the machine part (35) or a base body (37) of the wire saw connected to the machine part (35) has a contact surface (43), which is in particular planar, for placing the wire saw at a workpiece surface or at a guide rail.

5. A wire saw in accordance with any one of the preceding claims,
**characterized in that**
the support structure (19) comprises a splitting wedge (23) and two arms (24, 25) affixed to the splitting wedge (23), with the thickness of the splitting wedge (23) substantially corresponding to the cut width predefined by the saw wire (11).

## Revendications

1. Scie à câble comportant
une poulie d'entraînement (13), une poulie de renvoi (15) espacée de celle-ci, et un câble de sciage (11) qui est guidé en boucle fermée sur la poulie d'entraînement (13) et sur la poulie de renvoi (15),
dans laquelle
la poulie d'entraînement (13) est montée mobile en rotation sur une partie de machine (35) de la scie à câble, et la poulie de renvoi (15) est montée mobile en rotation sur une structure de support (19) reliée à la partie de machine (35), de telle sorte que le câble de sciage (11) est entouré par un espace libre dans une zone de portée (27) définie par la structure de support (19), et
la scie à câble est réalisée sous forme d'appareil manuel portatif, **caractérisée en ce que**
pour exécuter des coupes obliques latérales, la structure de support (19) est mobile en pivotement par rapport à la partie de machine (35) autour d'un axe de pivotement (S2) parallèle à l'axe de rotation (R) de la poulie d'entraînement (13).

2. Scie à câble selon la revendication 1,
**caractérisée en ce que**
l'axe de pivotement (S2) coïncide avec l'axe de rotation (R) de la poulie d'entraînement (13).

3. Scie à câble selon l'une des revendications précédentes,
**caractérisée en ce que**
le câble de sciage (11) est réalisé pour une coupe isotrope.

4. Scie à câble selon l'une des revendications précédentes,
**caractérisée en ce que**
la partie de machine (35) ou un corps de base (37), relié à la partie de machine (35), de la scie à câble présente une surface d'appui (43) en particulier plane pour poser la scie à câble contre une surface d'une pièce à oeuvrer ou contre un rail de guidage.

5. Scie à câble selon l'une des revendications précédentes,
**caractérisée en ce que**
la structure de support (19) comprend une cale à fente (23) et deux bras (24, 25) montés sur la cale à fente (23), l'épaisseur de la cale à fente (23) correspondant sensiblement à la largeur de coupe définie par le câble de sciage (11).
